Europäisches Patentamt

European Patent Office

Office européen des brevets

(11) Veröffentlichungsnummer: **0 291 871**
**A2**

## (12) EUROPÄISCHE PATENTANMELDUNG

(21) Anmeldenummer: 88107695.4

(22) Anmeldetag: 13.05.88

(51) Int. Cl.⁴: **C08G 77/12**

Die Bezeichnung der Erfindung wurde geändert (Richtlinien für die Prüfung im EPA, A-III, 7.3).

(30) Priorität: 15.05.87 DE 3716372

(43) Veröffentlichungstag der Anmeldung:
**23.11.88 Patentblatt 88/47**

(84) Benannte Vertragsstaaten:
**AT BE CH DE ES FR GB IT LI NL SE**

(71) Anmelder: **WACKER-CHEMIE GMBH**
**Prinzregentenstrasse 22**
**D-8000 München 22(DE)**

(72) Erfinder: **Burger, Christa, Dr. Dipl.-Chem.**
**Stadtplatz 95/96**
**D-8263 Burghausen(DE)**
Erfinder: **Müller, Johann**
**Friedrich-Ebert-Strasse 3**
**D-8263 Burghausen(DE)**
Erfinder: **Wegehaupt, Karl-Heinrich, Dr.**
**Dipl.-Chem.**
**Marktler Strasse 78**
**D-8263 Burghausen(DE)**

(54) **Verfahren zur Herstellung von Organopolysiloxanen und nach diesem Verfahren herstellbares Organopolysiloxan.**

(57) Organopolysiloxane mit direkt an Silicium gebundenem Wasserstoff und 3 bis 5 Siliciumatomen je Molekül werden dadurch hergestellt, daß symmetrisches Disiloxan der Formel

$(R_3Si)_2O$

mit Silan der Formel

$R_aSi(OR^1)_{4-a}$ ,

wobei R jeweils Wasserstoff oder gleiche oder verschiedene, einwertige SiC-gebundene organische Reste und $R^1$ gleiche oder verschiedene, gegebenenfalls durch eine Alkoxygruppe substituierte Alkylreste bedeutet und a 0, 1 oder 2 ist, mit der Maßgabe, daß an jedes Siliciumatom höchstens ein Wasserstoffatom direkt gebunden ist, mindestens ein Reaktionsteilnehmer direkt an Silicium gebundenen Wasserstoff enthält und daß das Disiloxan bereits vor Zugabe des Silans hergestellt wurde, und Wasser in Gegenwart von Säure umgesetzt werden.
Das Organopolysiloxan der Formel

$[H(CH_3)_2SiO]_3SiH$

ist neu.

## Verfahren zur Herstellung von Organopolysiloxanen und ein neues Organopolysiloxan

Verfahren zur Herstellung von Organopolysiloxanen mit direkt an Silicium gebundenen Wasserstoff und 3 bis 5 Siliciumatomen je Molekül durch Umsetzung von symmetrischem Organodisiloxan mit substituiertem Silan sind bereits bekannt. Hierzu wird z.B. auf US 4 113 760 (ausgegeben: 12. Sept. 1978, V. Frey et al., Wacker-Chemie GmbH) verwiesen.

Es bestand nun die Aufgabe, ein auch in größerem Maßstab verhältnismäßig leicht durchführbares und für die Herstellung von verhältnismäßig viel verschiedenen Arten von Organopolysiloxanen mit direkt an Silicium gebundenem Wasserstoff und 3 bis 5 Siliciumatomen je Molekül geeignetes Verfahren bereitzustellen, bei dem symmetrisches Organodisiloxan mit substituiertem Silan umgesetzt wird, jedoch kein korrodierendes Nebenprodukt, wie Chlorwasserstoff, gebildet wird und entsorgt werden muß und das verhältnismäßig gute Ausbeuten des gewinschten Produkts liefert. Diese Aufgabe wird durch die Erfindung gelöst.

Gegenstand der Erfindung ist ein Verfahren zur Herstellung von Organopolysiloxanen mit direkt an Silicium gebundenem Wasserstoff und 3 bis 5 Siliciumatomen je Molekül durch Umsetzung von symmetrischem Organodisiloxan mit substituiertem Silan, dadurch gekennzeichnet, daß symmetrisches Disiloxan der Formel

$$(R_3Si)_2O$$

mit Silan der Formel

$$R_aSi(OR^1)_{4-a},$$

wobei R jeweils Wasserstoff oder gleiche oder verschiedene, einwertige SiC-gebundene organische Reste und $R^1$ gleiche oder verschiedene, gegebenenfalls durch eine Alkoxygruppe substituierte Alkylreste bedeutet und a 0, 1 oder 2 ist, mit der Maßgabe, daß an jedes Siliciumatom höchstens ein Wasserstoffatom direkt gebunden ist, mindestens ein Reaktionsteilnnehmer direkt an Silicium gebundenen Wasserstoff enthält und daß das Disiloxan bereits vor Zugabe des Silans hergestellt wurde, und Wasser in Gegenwart von Säure umgesetzt wird.

Es können also bei dem erfindungsgemäßen Verfahren
a) Silan der Formel

$$HR_b^2 Si(OR^1)_{3-b}$$

worin $R^1$ die oben dafür angegebene Bedeutung hat und $R^2$ gleiche oder verschiedene, einwertige SiC-gebundene organische Reste bedeutet und b 0 oder 1 ist, mit symmetrischem Disiloxan der Formel

$$(R_3^2 Si)_2O ,$$

worin $R^2$ die vorstehend dafür angegebene Bedeutung hat, oder

$$(HR_2^2 Si)_2O ,$$

worin $R^2$ die vorstehend dafür angegebene Bedeutung hat, oder
b) Silan der Formel

$$R_c^2 Si(OR^1)_{4-c} \text{ oder } HR_b^2 Si(OR^1)_{3-b} ,$$

worin $R^2$ und b jeweils die oben dafür angegebene Bedeutung haben und c 0, 1 oder 2 ist, mit Disiloxan der Formel

$$(HR_2^2 Si)_2O ,$$

worin $R^2$ die oben dafür angegebene Bedeutung hat, und Wasser in Gegenwart von Säure umgesetzt werden.

Als organische Reste R und $R^2$ sind solche mit höchstens 18 Kohlenstoffatomen je Rest bevorzugt. Beispiele für derartige Reste sind Alkylreste, wie der Methyl-, Ethyl-, n-Propyl-, Isopropyl- und 2-Ethylhexylrest sowie Octadecylreste; Kohlenwasserstoffreste mit einer aliphatischen Doppelbindung, wie der Vinyl- und Allylrest; Arylreste, wie der Phenylrest; Alkarylreste, wie Tolylreste; und Aralkylreste, wie der Benzylrest. Diese Kohlenwasserstoffreste können Substituenten aufweisen, die unter den jeweiligen Verfahrensbedingungen gegenüber den in den Reaktionsgemischen anwesenden Stoffen inert sind. Beispiele für derartige substituierte Kohlenwasser stoffreste R und $R^2$ sind halogenierte Kohlenwasserstoffreste, wie der Chlormethyl-, gamma-Chlorpropyl- und 3,3,3-Trifluorpropylrest sowie o-, m- und p-Chlorphenylreste, und Acyloxyalkylenreste, wie der gamma-Acryloxypropyl- und gamma-Methacryloxypropylrest.

Insbesondere wegen der leichteren Zugänglichkeit ist als organischer Rest R und damit auch als Rest $R^2$ der Methylrest besonders bevorzugt.

Vorzugsweise weisen die Reste $R^1$ höchstens 4 Kohlenstoffatome je Rest auf, wie der Methyl-, Ethyl-, n-Propyl-, Isopropyl-, n-Butyl-, sec.-Butyl-, tert.-Butyl- und beta-Methoxyethylrest. Besonders bevorzugt als Rest $R^1$ ist der Ethylrest.

Besonders bevorzugte einzelne Beispiele für

Disiloxane der Formel

$$(R_3Si)_2O$$

und damit auch für Disiloxane der Formel

$$(R_3^2Si)_2O \text{ bzw. } (HR_2^2Si)_2O$$

sind Hexamethyldisiloxan und 1,1,3,3-Tetramethyldisiloxan.

Besonders bevorzugte einzelne Beispiele für Silane der Formel

$$R_aSi(OR^1)_{4-a}$$

sind im Falle der Silane der Formel

$$HR_b^2Si(OR^1)_{3-b}$$

Triethoxysilan und Methyldiethoxysilan und im Fall der Silane der Formel

$$R_c^2Si(OR^1)_{4-c}$$

Tetraethoxysilan, Methyltriethoxysilan und Dimethyldiethoxysilan.

Vorzugsweise werden 0,5 bis 1 Mol Disiloxan je Grammäquivalent $R^1O$-Gruppe eingesetzt.

Vorzugsweise werden 0,5 bis 2 Mol Wasser je Grammäquivalent $R^1O$-Gruppe eingesetzt. ist das Molverhältnis von Wasser zu 1 Grammäquivalent $R^1O$-Gruppen kleiner als 0,5:1, so sind die Ausbeuten nicht optimal. Größere Molverhältnisse von Wasser zu 1 Grammäquivalent $R^1O$-Gruppen als 2:1 ergeben keine zusätzlichen Vorteile.

Als Säuren, in deren Gegenwart das erfindungsgemäße Verfahren durchgeführt wird, werden vorzugsweise Protonensäuren mit einem negativen Logarithmus der Säurekonstante ($pK_s$ oder $pK_a$, vgl. H.R. Christen "Grundlagen der allgemeinen und anorganischen Chemie", Frankfurt/Main, 1973, Seite 354) von höchstens 1 verwendet. Beispiele für derartige Säuren sind Chlorwasserstoff, Schwefelsäure und Phosphorsäure. Chlorwasserstoff ist besonders bevorzugt, weil er besonders leicht zugänglich ist.

Säure wird vorzugsweise in Mengen von 0,01 bis 4 Gewichtsprozent, insbesondere 0,1 bis 2 Gewichtsprozent, jeweils bezogen auf das Gesamtgewicht von Silan, Wasser, Disiloxan und Säure, verwendet.

Vorzugsweise wird das erfindungsgemäße Verfahren bei 0°C bis 100°C und beim Druck der umgebenden Atmosphäre, also bei 1020 hPa oder etwa 1020 hPa durchgeführt Falls erwünscht, können aber auch höhere oder niedrigere Temperaturen und/oder höhere und/oder niedrigere Drücke angewendet werden.

Weiterhin ist es bevorzugt, das erfindungsgemäße Verfahren absatzweise durchzuführen und das jeweils verwendete Silan zu dem Gemisch aus Wasser, jeweils verwendetem Disiloxan und Säure zu geben.

Schließlich ist es bevorzugt, möglichst bald nach Beendigung der erfindungsgemäßen Umsetzung die Säure aus dem dabei gebildeten Gemisch zu entfernen, beispielsweise durch Zugabe von Natriumhydrogencarbonat oder Waschen mit Wasser.

Je nach Wahl der miteinander und Wasser umzusetzenden Siliciumverbindungen werden bei dem erfindungsgemäßen Verfahren Verbindungen der Formel

$$(R_3^2SiO)_2SiR^2H$$

$$(HR_2^2SiO)_2SiR_2^2$$

$$(HR_2^2SiO)_2SiR^2H$$

$$(R_3^2SiO)_3SiH$$

$$(HR_2^2SiO)_3SiR^2$$

$$(HR_2^2SiO)_3SiH$$

$$(HR_2^2SiO)_4Si$$

erhalten.

Das Organopolysiloxan der Formel

$$[H(CH_3)_2SiO]_3SiH$$

ist neu. Es wird deshalb ebenfalls beansprucht.

Die erfindungsgemäß hergestellten Organopolysiloxane können überall dort verwendet werden, wo derartige Organopolysiloxane erwünscht sind. Beispiele für derartige Verwendungszecke sind diejenigen als Bestandteile von durch Anlagerung von direkt an Silicium gebundenem Wasserstoff an SiC-gebundene Vinylgruppen vernetzbaren Massen, die Anlagerung von direkt an Silicium gebundenem Wasserstoff an rein-organische Verbindungen mit aliphatischer Kohlenstoff-Kohlenstoffmehrfachbindung, wie Acetylen, und als Haftvermittler, z.B. in durch Strahlung vernetzbaren Massen auf Grundlage von Organopolysiloxanen.

In den folgenden Beispielen beziehen sich alle Angaben von Prozentsätzen auf das Gewicht, soweit nichts anderes angegeben ist. Ebenso werden alle Maßnahmen bei Raumtemperatur durchgeführt, soweit nichts anderes angegeben ist.

Beispiel 1

Zu einem auf 0°C gekühlten Gemisch aus 268 g (2 Mol) 1,1,3,3-Tetramethyldisiloxan, 59,5 g Wasser und 2,7 g konz. Salzsäure werden unter Rühren und Halten der Temperatur bei 0°C 178 g (1 Mol) Methyltriethoxysilan tropfenweise gegeben. Nach Beendigung der Zugabe des Silans wird noch 30 Minuten bei 0°C gerührt. Dann wird das so erhaltene Organopolysiloxan solange mit Wasser gewaschen, bis das Waschwasser neutral reagiert, und schließlich mit Natriumsulfat getrocknet. Aufgrund des Kernmagnetischen $^1$H- und $^{29}$Si- Resonanzspektrums wird das Organopolysiloxan der Formel

$[H(CH_3)_2SiO]_3SiCH_3$

in einer Ausbeute von 80 % d.Th., bezogen auf die eingesetzte Menge des Silans, erhalten.

Beispiel 2

Zu einer Mischung aus 160,8 g (1,2 Mol) 1,1,3,3-Tetramethyldisiloxan, 36 g Wasser und 0,9 g konz. Salzsäure werden unter Rühren 148 g (1 Mol) Dimethyldiethoxysilan tropfenweise gegeben. Nach Beendigung der Zugabe des Silans wird noch 15 Minuten gerührt. Dann wird das so erhaltene Organopolysiloxan solange mit Wasser gewaschen, bis das Waschwasser neutral reagiert, und schließlich mit Natriumsulfat getrocknet, Aufgrund des Kernmagnetischen $^1$H- und $^{29}$Si- Resonanzspektrums wird das Organopolysiloxan der Formel

$[H(CH_3)_2SiO]_2Si(CH_3)_2$

in einer Ausbeute von 76 % d.Th., bezogen auf die eingesetzte Menge des Silans, erhalten.

Beispiel 3

Zu einem auf 0°C gekühlten Gemisch aus 402 g (3 Mol) 1,1,3,3-Tetramethyldisiloxan, 72 g Wasser und 6 g konz. Salzsäure werden unter Rühren und Halten der Temperatur bei 0°C 208 g (1 Mol) Tetramethoxysilan tropfenweise gegeben. Nach Beendigung der Zugabe des Silans wird noch 30 Minuten bei 0°C gerührt. Dann wird das so erhaltene Organopolysiloxan solange mit Wasser gewaschen, bis das Waschwasser neutral reagiert, und schließlich mit Natriumsulfat getrocknet. Aufgrund des Kernmagnetischen $^1$H- und $^{29}$Si-Resonanzspektrums wird das Organopolysiloxan der Formel

$[H(CH_3)_2SiO]_4Si$

in einer Ausbeute von mindestens 95 % d.Th., bezogen auf die eingesetzte Menge des Silans, erhalten.

Beispiel 4

Zu einem zum Sieden unter Rückfluß erwärmten Gemisch aus 194,4 kg (1200 Mol) Hexamethyldisiloxan, 6,4 kg Wasser und 7,2 kg konz. Salzsäure werden unter Rühren 65,6 kg (400 Mol) Triethoxysilan innerhalb von 2 Stunden gegeben. Nach Beendigung der Zugabe des Silans wird noch 1 Stunde unter Rühren zum Sieden unter Rückfluß erwärmt. Dann wird das so erhaltene Gemisch auf 60°C gekühlt, mit 7,2 kg Natriumhydrogencarbonat versetzt, 15 Minuten gerührt, zweimal mit Wasser gewaschen und schließlich mit Natriumsulfat getrocknet. Aufgrund des Kernmagnetischen $^1$H- und $^{29}$Si-Resonanzspektrums wird das Organopolysiloxan der Formel

$[(CH_3)_3SiO]_3SiH$

in einer Ausbeute von 66 % d.Th., bezogen auf die eingesetzte Menge des Silans, erhalten.

Beispiel 5

Zu einem Gemisch aus 81 g (0,5 Mol) Hexamethyldisiloxan, 6,0 g Wasser und 3,2 g konz. Salzsäure werden unter Rühren 67 g Methyldiethoxysilan tropfenweise gegeben. Nach Beendigung der Zugabe des Silans wird noch 15 Minuten gerührt. Dann wird das so erhaltene Organopolysiloxan solange mit Wasser gewaschen, bis das Waschwasser neutral regiert, und schließlich mit Natriumsulfat getrocknet. Aufgrund des Kernmagnetischen $^1$H-und $^{29}$Si-Resonanzspektrums wird das Organopolysiloxan der Formel

$[(CH_3)_3SiO]_2SiCH_3H$

in einer Ausbeute von 47 % d.Th., bezogen auf das eingesetzte Silan, erhalten.

Beispiel 6

Zu einem auf 0°C gekühlten Gemisch aus 201 g (1,5 Mol) 1,1,3,3-Tetramethyldisiloxan, 54 g Wasser und 12 g konz. Salzsäure werden unter Rühren und Halten der Temperatur bei 0°C 164 g (1 Mol) Triethoxysilan tropfenweise gegeben. Nach Beendigung der Zugabe des Silans wird noch 15 Minuten bei 0°C gerührt. Dann wird das so erhaltene Organopolysiloxan solange mit Wasser gewaschen, bis das Waschwasser neutral reagiert, und schließlich mit Natriumsulfat getrocknet. Aufgrund des Kernmagnetischen $^1$H- und $^{29}$Si-Resonanzspektrums wird das Organopolysiloxan der Formel

$$[H(CH_3)_2SiO]_3SiH$$

in einer Ausbeute von 63 % d.Th., bezogen auf die eingesetzte Menge des Silans, erhalten.

Beispiel 7

Zu einem zum Sieden unter Rückfluß erwärmten Gemisch aus 268 g (2 Mol) 1,1,3,3-Tetramethyldisiloxan, 18 g Wasser und 6 g konz. Salzsäure werden unter Rühren 134 g (1 Mol) Methyldiethoxysilan tropfenweise gegeben. Nach Beendigung der Zugabe des Silans wird noch 15 Minuten gerührt, wobei sich der Inhalt des Reaktionsgefäßes etwas abkühlt. Dann wird das so erhaltene Organopolysiloxan solange mit Wasser gewaschen, bis das Waschwasser neutral reagiert, und schließlich mit Natriumsulfat getrocknet. Aufgrund des Kernmagnetischen $^1$H- und $^{29}$Si-Resonanzspektrums wird das Organopolysiloxan der Formel

$$[H(CH_3)_2SiO]_2SiCH_3H$$

in einer Ausbeute von 66 % d.Th., bezogen auf die eingesetzte Menge des Silans, erhalten.

## Ansprüche

1. Verfahren zur Herstellung von Organopolysiloxanen mit direkt an Silicium gebundenem Wasserstoff und 3 bis 5 Siliciumatomen je Molekül durch Umsetzung von symmetrischem Organodisiloxan mit substituiertem Silan, dadurch gekennzeichnet, daß symmetrisches Disiloxan der Formel

$$(R_3Si)_2O$$

mit Silan der Formel

$$R_aSi(OR^1)_{4-a} ,$$

wobei R jeweils Wasserstoff oder gleiche oder verschiedene, einwertige SiC-gebundene organische Reste und $R^1$ gleiche oder verschiedene, gegebenenfalls durch eine Alkoxygruppe substituierte Alkylreste bedeutet und a 0, 1 oder 2 ist, mit der Maßgabe, daß an jedes Siliciumatom höchstens ein Wasserstoffatom direkt gebunden ist, mindestens ein Reaktionsteilnehmer direkt an Silicium gebundenen Wasserstoff enthält und daß das Disiloxan bereits vor Zugabe des Silans hergestellt wurde, und Wasser in Gegenwart von Säure umgesetzt wird.

2. Verfahren nach Anspruch 1, dadurch gekennzeichnet, daß Hexamethyldisiloxan mit Triethoxysilan oder Methyldiethoxysilan umgesetzt wird.

3. Verfahren nach Anspruch 1, dadurch gekennzeichnet, daß 1,1,3,3-Tetramethyldisiloxan mit Tetraethoxysilan, Triethoxysilan, Methyltriethoxysilan, Methyldiethoxysilan oder Dimethyldiethoxysilan umgesetzt wird.

4. Verfahren nach mindestens einem der Ansprüche 1 bis 3, dadurch gekennzeichnet, daß 0,5 bis 1 Mol Disiloxan je Grammäquivalent $R^1$O-Gruppe eingesetzt werden.

5. Verfahren nach mindestens einem der Ansprüche 1 bis 4, dadurch gekennzeichnet, daß als Säure eine Protonensäure mit einem $pK_s$-Wert von höchstens 1 verwendet wird.

6. Verfahren nach mindestens einem der Ansprüche 1 bis 5, dadurch gekennzeichnet, daß als Säure Chlorwasserstoff verwendet wird.

7. Verfahren nach mindestens einem der Ansprüche 1 bis 6, dadurch gekennzeichnet, daß das Silan zu einem Gemisch aus Disiloxan, Wasser und Säure gegeben wird.

8. Organopolysiloxan der Formel

$$[H(CH_3)_2SiO]_3SiH$$